# FASCICULE DE BREVET EUROPEEN

(11) **EP 2 952 321 B1**
(45) Date de publication et mention de la délivrance du brevet: **19.04.2017**
(21) Numéro de dépôt: 15168133.5
(22) Date de dépôt: 19.05.2015
(51) Int. Cl.: B29C 45/14, B29C 45/24, B29C 45/26, F16H 55/06

(54) **PROCÉDÉ DE SURMOULAGE D'UNE ROUE DENTÉE AVEC PIÉGEAGE DE LA GOUTTE FROIDE**
VERFAHREN ZUM SPRITZGIESSEN EINES ZAHNRADS MIT ABSCHEIDUNG DER KALTEN PFOPFEN / SPRITZKUGELN
METHOD FOR OVERMOULDING A TOOTHED WHEEL WITH COLD-DROP TRAPPING /COLD SLUG

(30) Priorité: 03.06.2014 FR 1455006
(43) Date de publication de la demande: 09.12.2015
(73) Titulaire: Jtekt Europe, 69540 Irigny (FR)
(72) Inventeur: Brochot, Patrice, 69600 Oullins (FR); Rey, Laurent, 69100 Villeurbanne (FR)
(74) Mandataire: Chevalier, Renaud Philippe

(56) Documents cités:
- EP-A1- 2 381 136
- DE-A1-102012 102 778
- JP-A- H09 280 345
- JP-A- 2000 000 852
- JP-A- 2002 103 385
- JP-A- 2005 305 779
- JP-A- 2011 068 062
- JP-A- 2011 075 000
- US-A1- 2012 111 144

## Description

La présente invention concerne le domaine général de la fabrication des roues destinées à assurer la transmission d'un couple au sein d'un mécanisme, et plus particulièrement le domaine de la fabrication des roues dentées destinées aux mécanismes de type engrenages.

La présente invention concerne plus particulièrement la fabrication des roues dentées destinées aux réducteurs de direction assistée pour véhicules automobiles.

On connaît déjà des procédés de fabrication de roues dentées par surmoulage, au cours desquels on introduit dans un moule un insert formant moyeu, puis l'on réalise, par surmoulage, une jante en matériau polymère autour dudit moyeu.

Ainsi, le document D1 : US-2012/0111144 décrit (les références sont ici celles utilisées dans ledit document D1) un procédé de fabrication d'une roue qui prévoit, tout comme le préambule de la revendication 1, une étape d'enrobage au cours de laquelle on forme une jante en polymère 29 sur le bord périphérique d'une âme 28, en utilisant une buse d'injection 56 placée en déport radial de l'axe, en vis-à-vis d'une cavité de piégeage 37, 67 et l'on piège la goutte froide 38 qui reste ainsi à demeure dans la roue finie (§53, fig. 2 de D1).

Par ailleurs, si certains procédés connus permettent de réaliser relativement facilement des roues dentées, ils peuvent toutefois présenter certains inconvénients.

Tout d'abord, afin de répartir efficacement le matériau injecté autour du moyeu, il est nécessaire de prévoir une descente coulée conique de grandes dimensions, centrée sur l'axe de la roue et qui fait saillie axialement par rapport à la roue.

Or, une fois refroidie et solidifiée, cette descente de coulée forme un excédent de matière de grand volume qu'il est nécessaire d'éliminer par une reprise d'usinage, de type fraisage.

Le temps de cycle du procédé de fabrication, et sa consommation de matière première, s'en trouvent donc accrues.

Ensuite, au terme de chaque cycle d'injection, le refroidissement du moule provoque l'apparition, à l'extrémité de la buse d'injection, d'un petit bouchon de matériau solidifié, dit « goutte froide ».

Cette goutte froide est expulsée, lors de l'injection suivante, sous forme d'un grain solide qui se mélange au matériau fondu, mais qui, généralement, ne refond pas totalement et crée ainsi une hétérogénéité au sein de la coulée.

Afin d'éviter que cette goutte froide ne se retrouve dans la roue finie, et notamment dans une partie fortement sollicitée de la jante ou à la surface des dents d'engrènement, où ladite goutte froide formerait un défaut susceptible de fragiliser la roue et d'occasionner une rupture prématurée, il est indispensable de piéger ladite goutte froide au début de l'injection, dans une cavité prévue à cet effet dans la descente de coulée, puis d'éliminer ladite goutte froide en même temps que les résidus de descente de coulée, lors de la reprise d'usinage.

Par sécurité, il est également nécessaire de procéder, après ladite reprise d'usinage, à une inspection minutieuse de la roue finie, afin de s'assurer que le piégeage de la goutte froide a bien fonctionné, et que celle-ci n'apparaît pas à la surface de la jante ou, plus particulièrement, à la surface des dents d'engrènement.

Ici encore, la fiabilisation du procédé impose donc un certain gaspillage de temps et de matière première.

Les objets assignés à l'invention visent par conséquent à remédier aux inconvénients susmentionnés et à proposer un nouveau procédé de fabrication de roues, notamment de roues dentées, qui soit simple et peu onéreux à mettre en oeuvre, et qui permette d'obtenir, rapidement et sans gaspillage de matière, des roues à la fois légères et particulièrement robustes.

Les objets assignés à l'invention sont atteints au moyen d'un procédé de fabrication d'une roue comprenant une étape (a) de réalisation d'une âme porteuse au cours de laquelle on réalise, dans un premier matériau, une âme porteuse qui s'étend depuis une paroi radialement interne formant un alésage d'axe directeur (XX'), correspondant à l'axe de rotation de la roue, jusqu'à un bord périphérique radialement externe, ledit procédé comprenant ensuite une étape (b) d'enrobage au cours de laquelle on place l'âme porteuse dans un moule et l'on injecte, au moyen d'au moins une buse d'injection, un second matériau polymère de sorte à enrober, par surmoulage, au moins partiellement ladite âme porteuse afin de former une jante autour de son bord périphérique, ledit procédé étant caractérisé en ce que, lors de l'étape (b) d'enrobage, on place la buse d'injection en déport radial de l'axe directeur (XX') et de l'alésage, en vis-à-vis d'une cavité de piégeage qui est formée dans l'épaisseur axiale de ladite âme porteuse, dans l'espace compris radialement entre l'alésage et le bord périphérique, de telle manière que, lorsqu'une goutte froide s'est précédemment solidifiée dans la buse d'injection, on expulse, lors de l'injection du second matériau, ladite goutte froide hors de la buse d'injection et jusque dans ladite cavité de piégeage, de telle sorte que ladite goutte froide reste piégée définitivement à l'intérieur de la roue finie.

Avantageusement, en piégeant intentionnellement la goutte froide directement, et à vie, à l'intérieur de la roue, dans une cavité de piégeage appropriée qui est située dans une zone de ladite roue considérée comme non fonctionnelle, car peu sollicitée par les contraintes mécaniques de fonctionnement de la roue et peu voire pas exposée à l'usure et aux agressions extérieures, le procédé conforme à l'invention permet de simplifier et d'accélérer la fabrication de la roue, notamment en autorisant la mise en oeuvre d'un moule plus compact, avec un faible volume de descente de coulée, et en supprimant la reprise d'usinage de la tête de coulée, puisque le second matériau peut être injecté directement dans le volume final de la roue (c'est-à-dire que la roue peut être réalisée par injection du second matériau directement dans la partie fonctionnelle du moule qui délimite les contours de ladite roue, sans qu'il soit nécessaire de prévoir un volume excédentaire, perdu, formant une tête de coulée destinée à retenir la goutte froide), et ceci tout en garantissant malgré tout, de façon fiable et reproductible, que la goutte froide ne crée aucune faiblesse dans la roue à laquelle elle est intégrée.

En particulier, l'invention permet de s'affranchir de toute inspection minutieuse et systématique de la roue finie, dès lors qu'une éventuelle goutte froide se retrouvera nécessairement et systématiquement piégée dans la cavité de piégeage, et ne peut donc en aucun cas menacer l'intégrité ou la résistance mécanique d'une autre partie de la roue, et notamment de la jante ou de la denture de ladite roue.

Avantageusement, le piégeage de la goutte froide à l'intérieur de la roue elle-même permet de réaliser l'enrobage de l'âme porteuse au moyen d'une buse d'injection déportée latéralement, sans compromettre la solidité de la roue (puisque la goutte froide est piégée dans une zone où elle n'a pas d'influence néfaste sur le comportement mécanique ou la longévité de la roue).

Or, le déport radial de la buse permet notamment de simplifier la structure du moule, car il est facile d'accéder à la roue par abord latéral excentré, quelle que soit la configuration de mise en place de la roue, et notamment, sans interférer, le cas échéant, avec l'arbre qui soutient ladite roue.

La combinaison d'un piégeage interne et d'un surmoulage par buse déportée latéralement, optimisé par la présence d'un tel piégeage interne, rend donc le procédé selon l'invention particulièrement polyvalent, car adaptable à de multiples configurations et formats de roues, et économique, car peu gourmand en énergie, en temps machine, et en matière première.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
Les figures 1, 2 et 3 illustrent, selon des vues en coupe axiale, les étapes successives d'un procédé de fabrication de roue selon l'invention.
La figure 4 illustre, selon une vue en perspective, une roue finie obtenue par un procédé selon l'invention, montée sur son arbre.
La figure 5 illustre, selon une vue en perspective écorchée, le détail de la goutte froide piégée dans la roue de la figure 4.
Les figures 6 à 10 illustrent, selon des vues partielles en coupe axiale, le détail de différentes variantes de réalisation de cavités de piégeage pouvant être mises en oeuvre conformément à l'invention.

La présente invention concerne un procédé de fabrication d'une roue 1, et plus particulièrement d'une roue 1 dentée.

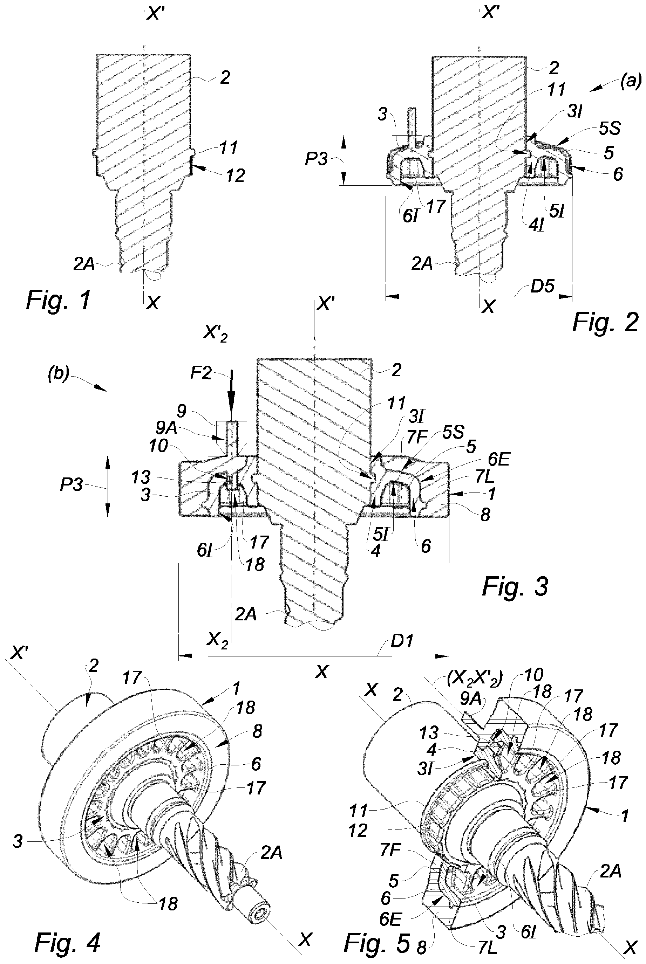

Ladite roue dentée 1 pourra notamment être une roue de réducteur à engrenage, et plus particulièrement, tel que cela est illustré sur les figures 4 et 5, une roue de réducteur pour direction assistée.

A ce titre, la roue 1 pourra par exemple former une roue tangente destinée à être entraînée par une vis sans fin.

La roue dentée 1 pourra présenter tout type de dents d'engrènement (non représentées), par exemple formant une denture droite, une denture hélicoïdale, ou une denture en chevrons.

Tel que cela est illustré sur les figures 4 et 5, la roue 1 sera avantageusement fixée à un arbre 2, de préférence métallique, qui matérialise l'axe de rotation de ladite roue.

Ledit arbre 2 comprendra de préférence, par exemple à l'une de ses extrémités, un pignon 2A lui permettant de venir en prise avec une autre pièce dentée, telle qu'une colonne de direction ou une crémaillère.

Selon l'invention, le procédé comprend, tel que cela est illustré sur la figure 2, une étape (a) de réalisation d'une âme porteuse 3 au cours de laquelle on réalise, dans un premier matériau, une âme porteuse 3 qui s'étend depuis une paroi radialement interne 3I formant un alésage d'axe directeur (XX'), jusqu'à un bord périphérique 6 radialement externe.

L'axe directeur (XX') correspondra avantageusement à l'axe de rotation de la roue 1, commun aux différents éléments constitutifs de ladite roue 1, et sera en pratique matérialisé par l'arbre 2 susmentionné.

Par commodité de description, on désignera par « axiale » une direction ou une dimension considérée selon ledit axe directeur (XX') ou parallèlement à ce dernier, et par « radiale » une direction ou une dimension considérée transversalement, et plus particulièrement perpendiculairement, audit axe directeur (XX').

Par commodité de notation, on pourra assimiler l'alésage à la paroi radialement interne 3I qui forme (et délimite) ledit alésage.

Tant par commodité de fabrication que pour alléger la roue 1, le premier matériau sera de préférence un matériau polymère, et plus particulièrement un matériau polymère thermoplastique, permettant une fabrication de l'âme 3 par moulage par injection.

En outre, l'âme porteuse 3 est préférentiellement formée d'un seul tenant, ce qui en simplifie la fabrication et en améliore la robustesse.

Selon une variante préférée de mise en oeuvre, lors de l'étape (a) de réalisation de l'âme porteuse, on forme, préférentiellement d'un seul tenant, l'âme porteuse 3 dans un premier matériau polymère, de préférence thermoplastique, par surmoulage direct de ladite âme porteuse 3 autour d'un arbre 2 (déjà mentionné plus haut) matérialisant l'axe de rotation (XX') de la roue 1, tel que cela est illustré sur la figure 2.

On pourra ainsi réaliser de manière simple et rapide la fixation de la roue 1 sur l'arbre 2, en utilisant ledit arbre 2 comme noyau lors du (premier) surmoulage utilisé pour réaliser l'âme porteuse 3.

L'arbre 2 comprendra par ailleurs de préférence un pignon 2A, qui sera préférentiellement usiné préalablement au surmoulage de l'âme 3 sur ledit arbre 2.

Pour améliorer la solidité de l'ancrage de la roue 1 sur l'arbre 2, ledit arbre 2 pourra être pourvu, tel que cela est notamment visible sur les figures 2 et 5, de formes d'accroche 11, 12, telles qu'une couronne d'arrêt 11 saillante (renforçant la tenue axiale) et/ou des indentations 12 radiales (renforçant la tenue au couple), qui seront noyées par le premier matériau constitutif de l'âme 3 lors de la formation de cette dernière par surmoulage.

Selon une possibilité préférentielle d'agencement, l'âme porteuse 3 pourra comprendre, tel que cela est illustré sur les figures 2 à 10, un moyeu 4, sensiblement cylindrique, qui matérialise la paroi radialement interne 3I de l'alésage, ainsi qu'une collerette 5 qui s'étend sensiblement radialement depuis ledit moyeu 4, en s'éloignant de l'axe directeur (XX'), jusqu'au bord périphérique 6, ici préférentiellement formé par un bord tombé.

Par convention, on considérera que la collerette 5 est délimitée axialement par une surface dite « supérieure » 5S orientée du côté axialement opposé au bord tombé 6, et par une surface dite « inférieure » 5I orientée axialement du côté du bord tombé 6, ledit bord tombé 6 étant rabattu (sensiblement en « L ») vers l'axe directeur (XX') par rapport à la collerette 5, et contenu en retrait axial de la face supérieure 5S.

L'âme porteuse 3 pourra ainsi présenter une forme convexe creuse, sensiblement en cloche, à la fois robuste, rigide et légère.

La collerette 5 (pleine) entoure de préférence le moyeu 4 sur tout le pourtour dudit moyeu, à 360 degrés autour de l'axe directeur (XX'), pour faire office de rayons de la roue, de manière à pouvoir assurer une liaison stable entre ledit moyeu 4 et la jante 8 située à la périphérie de la roue dentée 1 (jante dans l'épaisseur de laquelle sont taillée les dents d'engrènement, le cas échéant).

A ce titre, on notera que le diamètre hors-tout D5 de la collerette 5, et plus globalement le diamètre hors-tout de l'âme porteuse 3, sera de préférence égal ou supérieur à 50%, 60 %, voire 75 % du diamètre hors-tout D1 de la roue 1 finie, et de préférence inférieur ou égal à 90 %, voire à 85 % dudit diamètre hors-tout D1 de la roue finie. A titre indicatif, sur les vues fournies, ce rapport D5/D1 est de l'ordre de 84 %.

Par ailleurs, bien que l'invention ne soit pas limitée à une roue 1 de dimensions particulières, on notera que, dans le cadre notamment d'une roue 1 destinée à un réducteur de direction assistée, le diamètre hors-tout D1 de ladite roue 1 pourra être sensiblement compris entre 3 cm et 20 cm, plus particulièrement entre 5 cm et 15 cm, et de préférence égal à 10 cm.

Le moyeu 4 s'étendra de préférence axialement au-delà de l'épaisseur de la collerette 5, afin d'assurer une portée axiale suffisante de la roue 1 sur son arbre.

De préférence, par mesure de compacité, ledit moyeu 4 s'étendra au moins en partie en saillie axiale de la surface inférieure 5I, à l'intérieur du volume enveloppé par la collerette 5 et par le bord tombé 6, tel que cela est notamment visible sur les figures 2, 3 et 5 à 10.

De façon particulièrement préférentielle, le moyeu 4 s'étendra (dépassera) axialement de part et d'autre de la collerette 5, aussi bien en saillie axiale de la surface supérieure 5S que, à l'opposé, en saillie axiale de la surface inférieure 5I.

Selon l'invention, le procédé comprendra, après l'étape (a) de réalisation d'une âme porteuse 3, une étape (b) d'enrobage au cours de laquelle on place l'âme porteuse 3 dans un moule et l'on injecte, au moyen d'au moins une buse d'injection 9, un second matériau polymère de sorte à enrober, par surmoulage, au moins partiellement ladite âme porteuse 3 afin de former une jante 8 autour de son bord périphérique 6, tel que cela est illustré sur la figure 3.

Plus particulièrement, le second matériau, de préférence un matériau polymère thermoplastique, sert à former une couche d'enrobage 7 qui recouvre au moins en partie, voire en totalité, la surface convexe apparente de l'âme porteuse 3.

De préférence, tel que cela est illustré sur les figures 3, 5 et 6 à 10, la couche d'enrobage 7 (qui subsiste par ailleurs sur la roue 1 définitive) comprend d'un seul tenant d'une part une couche frontale 7F (ou « couche supérieure ») qui recouvre la surface supérieure 5S de la collerette 5 en surépaisseur axiale de ladite collerette 5, et d'autre part une couche latérale 7L qui prolonge axialement ladite couche frontale 7F en recouvrant la surface radialement externe 6E du bord tombé 6, en surépaisseur radiale dudit bord tombé 6, de telle manière que ladite couche latérale 7L forme une jante 8 (dans l'épaisseur radiale de laquelle seront réalisées, le cas échéant, les dents d'engrènement de la roue 1).

En définitive, le procédé comprendra donc de préférence deux étapes de surmoulage successives, à savoir une première étape de surmoulage selon laquelle on réalise l'âme porteuse 3 en rapportant par surmoulage le premier matériau autour de l'arbre 2 (ou, le cas échéant, d'un noyau de moulage quelconque), puis une seconde étape de surmoulage au cours de laquelle on réalise la couche d'enrobage 7 en rapportant par surmoulage le second matériau pour former la couche d'enrobage 7 sur l'âme porteuse 3 préalablement solidifiée.

On notera que, avantageusement, un tel procédé permet de réaliser rapidement et de façon simple la structure de la roue 1, avec un outillage minimal, car au moins une partie du moule utilisé pour le premier surmoulage, par exemple l'empreinte inférieure qui permet de mouler la surface inférieure 5I concave de l'âme 3 opposée à la surface supérieure 5S, peut être éventuellement réutilisée pour le second surmoulage.

Un tel procédé permet en outre d'économiser de l'énergie, car le second surmoulage peut intervenir « à chaud », sitôt que l'âme porteuse 3 est solidifiée, alors que ladite âme porteuse 3, et au moins une partie du moule (la partie réutilisée), est encore chaude du premier surmoulage.

De préférence, le procédé comporte une étape (c) de taillage, postérieure à l'étape (b) d'enrobage, au cours de laquelle on réalise des dents d'engrènement (non représentées) par taillage dans l'épaisseur (radiale) de la jante 8 afin d'obtenir une roue dentée.

Avantageusement, en taillant les dents d'engrènement *a posteriori*, après avoir fini de mouler la roue 1, c'est-à-dire en particulier après avoir procédé à l'ensemble des étapes de premier surmoulage (de l'âme 3 sur l'arbre 2) et de second surmoulage (de la couche d'enrobage 7 sur ladite âme 3), et alors que l'axe de rotation effectif de la roue 1 est déjà matérialisé par l'arbre 2 sur lequel ladite roue 1 est fixée, si bien que ledit arbre 2 forme une référence pour la machine de taillage, on pourra éviter tout défaut de circularité et de concentricité entre le diamètre primitif des dents obtenues par taillage et ledit axe effectif de rotation.

De préférence, le premier matériau, préférentiellement un polymère thermoplastique, qui est utilisé pour réaliser l'âme porteuse 3, présente une rigidité supérieure au second matériau utilisé pour enrober l'âme porteuse et former la jante 8 (et plus globalement la couche d'enrobage 7), c'est-à-dire que, en pratique, le premier matériau sera choisi de sorte à présenter un module d'Young plus élevé que celui du second matériau.

Cette rigidité supérieure peut par exemple être obtenue grâce à l'ajout de fibres de renfort, notamment de fibres de verre, de carbone, d'aramide, etc., noyées dans une matrice polymère, afin d'obtenir un premier matériau composite.

Bien entendu, le premier matériau aussi bien que le second matériau seront rigides une fois solidifiés, à température ambiante et sur toute la plage de température de fonctionnement prévisible de la roue 1.

L'utilisation d'un second matériau moins rigide (plus souple) pour former la couche d'enrobage 7 présentera plusieurs avantages.

Tout d'abord, un tel second matériau sera facile à usiner, ce qui rendra le taillage des dents d'engrènement rapide et peu coûteux.

Ensuite, une fois la roue 1 formée et mise en oeuvre au sein d'un mécanisme de transmission d'effort, et plus particulièrement d'un réducteur à vis sans fin, la relative souplesse des dents d'engrènement permettra à ces dernières d'épouser la forme des filets de la vis sans fin, ce qui augmentera le nombre de dents en prise ainsi que les surfaces de contact sous forte charge. Cette relative souplesse permettra aussi de répartir et diffuser la charge sur une portion plus étendue de l'âme porteuse 3 et ainsi d'éviter l'apparition de contraintes locales élevées, susceptibles d'être à l'origine de ruptures.

Le fonctionnement et la longévité de la roue 1 s'en trouveront ainsi améliorés.

L'utilisation d'un premier matériau plus rigide, et plus particulièrement d'un premier matériau fibré, pour former l'âme porteuse 3, permettra avantageusement de limiter la déformation sous charge de ladite âme 3, et donc, plus globalement, de la structure de la roue 1.

L'utilisation de fibres de renfort rendra en outre ladite âme porteuse 3, et plus globalement la roue 1, moins sensible aux phénomènes de dilatation thermique, et conférera à ladite âme porteuse 3, qui forme la portion la plus sollicitée mécaniquement de la roue 1 bi-matière ainsi obtenue, une meilleure résistance à la fatigue mécanique, ainsi qu'au vieillissement thermique et chimique (vis-à-vis des lubrifiants utilisés dans le mécanisme), ce qui procurera par conséquent à la roue 1 une meilleure longévité.

Avantageusement, en créant et en façonnant à moindre coût une couche d'enrobage 7 dans un second matériau plus souple que le premier, tout en venant consolider, par cette même couche d'enrobage 7 (par l'ajout d'épaisseur), l'âme porteuse 3 qui supporte ladite couche d'enrobage 7 et qui est déjà en elle-même particulièrement rigide et solide, l'invention permet d'obtenir en définitive une roue dentée 1 bi-matière qui concilie robustesse, faible coût de fabrication, et qualité de fonctionnement.

Par ailleurs, bien que le premier matériau et le second matériau présentent préférentiellement des compositions, et donc des propriétés mécaniques, distinctes, il posséderont de préférence une certaine affinité (compatibilité) chimique l'un envers l'autre, et le cas échéant des températures de transition vitreuse assez proches, afin de pouvoir se lier par adhérence l'un à l'autre, et plus particulièrement afin de pouvoir se fixer l'un à l'autre par re-fusion superficielle du premier matériau (de l'âme 3) lors de l'injection du second matériau (de la couche d'enrobage 7).

A titre indicatif, on pourra utiliser un premier matériau composite comprenant une matrice polymère de même composition que le second matériau mais contenant, à la différence dudit second matériau, des fibres de renfort, ou bien, si le second matériau est lui-même un composite contenant des fibres de renfort, un premier matériau contenant une plus grande concentration de fibres de renfort, ou bien des fibres de renfort d'une autre nature que celle du premier matériau.

A titre d'exemple, on pourra choisir un polyamide PA66 fibré à 50% de fibres de verre comme premier matériau, et un polyamide PA66 comme second matériau.

Selon l'invention, et tel que cela est illustré sur les figures 3 et 6 à 10, lors de l'étape (b) d'enrobage, on place la buse d'injection 9 en déport radial de l'axe directeur (XX') et de l'alésage 3I, en vis-à-vis d'une cavité de piégeage 10 qui est formée dans l'épaisseur axiale P3 de l'âme porteuse 3 (c'est-à-dire située dans la plage axiale hors-tout couverte, le long de l'axe directeur (XX'), par ladite âme porteuse 3), et dans l'espace compris radialement entre l'alésage 3I d'une part et le bord périphérique 6 (et plus particulièrement la surface radialement externe 6E du bord tombé) d'autre part, de telle manière que, lorsqu'une goutte froide 13 s'est précédemment solidifiée dans la buse d'injection 9, on expulse, lors de l'injection F2 du second matériau, ladite goutte froide 13 hors de la buse d'injection 9 et jusque dans ladite cavité de piégeage 10, de telle sorte que ladite goutte froide 13 reste piégée définitivement à l'intérieur de la roue finie 1.

Plus particulièrement, la cavité de piégeage 10, placée sensiblement dans l'alignement de la buse d'injection 9, à distance (ici axiale) de cette dernière, reçoit et capture, lors de l'étape (b) d'enrobage, le « premier jet » de matière, composé de la goutte froide 13 solide et du second matériau liquide qui charrie ladite goutte froide lors de son expulsion de la buse 9.

Avantageusement, lorsque le second matériau se solidifie autour de la goutte froide 13 après avoir rempli la cavité de piégeage 10, ladite goutte froide 13 est efficacement retenue prisonnière dans l'espace de ladite cavité de piégeage 10, dans les "profondeurs" de l'âme porteuse 3.

Cet effet de retenue est encore accentué par la présence, en surépaisseur, de la couche d'enrobage 7, notamment de la couche d'enrobage frontale 7F, qui recouvre la cavité de piégeage 10 à la manière d'un opercule et garantit ainsi que la goutte froide n'apparaît pas en surface de la roue 1 finie.

Avantageusement, en piégeant intentionnellement, et à vie, la goutte froide 13 à l'intérieur de la roue 1, dans une cavité de piégeage 10 interne située à l'intérieur du volume de la roue 1, et plus particulièrement à l'intérieur du volume hors-tout (tant axial que radial) de l'âme porteuse 3, plutôt que dans une descente de coulée externe qui devrait faire l'objet d'un enlèvement ultérieur par usinage, on peut avantageusement garantir la qualité de la roue 1, et notamment l'absence de zone de fragilité ou d'amorce de rupture dans les portions fonctionnelles de ladite roue 1, tout en minimisant l'encombrement de ladite roue 1, et par conséquent le poids de ladite roue, ainsi que le volume du moule utilisé (ce qui permet donc de réduire le coût de l'outillage ainsi que la consommation de matière première).

Avantageusement, le procédé selon l'invention permet d'exploiter le second matériau directement, dès le « premier jet », pour former d'emblée des portions constitutives de la roue 1, sans surconsommation de matière qui serait nécessaire à une gestion « externe » de la goutte froide 13, et plus particulièrement qui serait nécessaire au remplissage à perte d'un excédent de volume du système d'alimentation du moule (descente de coulée).

Cette optimisation de l'utilisation du second matériau selon l'invention permet de limiter efficacement la consommation de matière première, et plus particulièrement de second matériau.

Afin de pouvoir recueillir et capturer immédiatement la goutte froide 13 en sortie de buse d'injection 9, la cavité de piégeage 10 sera située dans le prolongement de ladite buse d'injection 9, et plus particulièrement dans le prolongement du canal d'injection 9A dont ladite buse définit la direction.

De préférence, la buse d'injection 9, et plus particulièrement le canal d'injection 9A, sera orienté(e) sensiblement parallèlement à l'axe directeur (XX'), selon un axe d'injection (X₂X₂') excentré par rapport audit axe directeur (XX') et sensiblement parallèle à ce dernier.

On notera par ailleurs que l'excentration de la buse d'injection 9, c'est-à-dire le décalage latéral de celle-ci en déport radial de l'axe directeur (XX'), permet d'approcher ladite buse d'injection 9 au plus près de l'âme porteuse 3, et plus globalement de la roue 1, sans risque de heurter l'arbre 2 ou d'interférer avec le volume occupé par ledit arbre 2, même si ladite buse 9 est relativement courte et/ou même si la roue 1 est formée non pas en tête (extrémité) d'arbre, mais dans un tronçon intermédiaire dudit arbre 2, et par exemple si ladite roue 1 est implantée dans un tronçon compris entre un quart, voire un tiers, de la longueur (axiale) dudit arbre et la moitié de la longueur (axiale) dudit arbre 2.

En d'autres termes, le décalage latéral de la buse d'injection 9 tel que proposé par l'invention, et dont la mise en oeuvre est favorisée (et notamment sécurisée) par l'utilisation d'une cavité de piégeage 10 interne, améliore l'accessibilité de la buse d'injection 9 au moule, quelle que soit la position choisie de la roue 1 sur l'arbre 2, et quelle que soit la longueur dudit arbre 2, ce qui permet notamment de réduire l'encombrement du moule, ainsi que la taille des descentes de coulées (puisque ces dernières n'ont plus à former, par exemple, un cône coiffant l'extrémité de l'arbre 2 et courant jusqu'à la position de la roue, éloignée de ladite extrémité).

L'invention permet donc d'obtenir un surmoulage efficace et homogène, sans gaspillage de matière, ni d'énergie (nécessaire notamment pour chauffer le moule et les descentes de coulée).

De préférence, tel que cela a été mentionné plus haut, l'âme porteuse 3 comprend un moyeu 4, qui matérialise la paroi radialement interne 3I de l'alésage, et une collerette 5 qui s'étend sensiblement radialement depuis ledit moyeu 4 jusqu'au bord périphérique radialement externe 6 (lequel prend préférentiellement la forme d'un bord tombé, distant et distinct du moyeu 4).

De préférence, l'âme porteuse 3 pourra alors également comporter une pluralité de nervures de renfort 17 disposées selon plusieurs azimuts (plusieurs directions de lacet) autour de l'axe directeur (XX') afin de renforcer localement l'épaisseur axiale de la collerette 5, tel que cela est notamment visible sur les figures 4 et 5.

Plus particulièrement, chacune de ces nervures de renfort 17 pourra relier le moyeu 4 à la surface inférieure 5I de la collerette 5 et à la surface radialement interne 6I du bord périphérique tombé 6.

Avantageusement, les nervures de renfort 17 pourront délimiter entre elles des alvéoles 18, vides, et ainsi former, dans le volume concave couvert et délimité par la collerette 5 et le bord périphérique tombé 6, une structure de type nid d'abeille à la fois mécaniquement résistante et particulièrement légère.

Avantageusement, et quelle que soit leur forme, les nervures de renfort 17 étaieront la surface inférieure 5I de la collerette, au "dos" de l'âme porteuse 3, c'est-à-dire à l'opposé et à l'aplomb axial de la surface supérieure 5S destinée à recevoir la couche d'enrobage 7, et plus particulièrement à l'opposé et à l'aplomb axial de la buse d'injection 9.

Cet agencement permettra notamment à l'âme porteuse 3 de supporter efficacement et sans déformation la pression d'injection et l'écoulement du second matériau lors de la formation de la couche enrobage 7.

De préférence, tel que cela est notamment visible sur les figures 3 et 5, la surface inférieure 5I de la collerette 5, et la structure en nid d'abeille 17, 18, resteront nues, c'est-à-dire non revêtues par le second matériau.

De façon particulièrement préférentielle, tel que cela est visible sur les figures 3 à 10, la cavité de piégeage 10 sera formée dans un secteur angulaire (considéré autour de l'axe directeur) creux, compris(e) entre deux nervures de renfort 17 consécutives, c'est-à-dire, en pratique, dans une alvéole 18.

Avantageusement, l'invention propose donc, selon une caractéristique qui peut constituer une invention à part entière, d'exploiter comme cavité de piégeage 10 de la goutte froide 13 une zone disponible "naturellement" creuse de la roue 1, de type alvéole 18 d'allègement, c'est-à-dire une zone non fonctionnelle que l'on pourrait, d'un strict point de vue mécanique, au regard du dimensionnement nécessaire à la résistance de la roue 1, laisser vide, notamment pour éviter une surconsommation de matière et un alourdissement de la roue.

En d'autres termes, il n'est donc pas nécessaire d'altérer la structure de l'âme porteuse 3 pour pouvoir y loger la goutte froide 13, puisque la cavité de piégeage 10 exploite, de façon simple et opportune, un volume laissé vacant par les éléments porteurs qui constituent l'infrastructure rigide de la roue, et plus particulièrement vient se loger dans le volume, normalement inoccupé, qui est dégagé (par une alvéole 18) entre les branches qui matérialisent les (principaux) rayons de la roue 1.

On notera avantageusement que l'insertion de la goutte froide 13 dans l'espace compris entre deux nervures de renfort 17, et plus globalement l'insertion d'un bloc composé de ladite goutte froide 13 et du second matériau qui a rempli la cavité de piégeage 10 et s'est solidifié autour de ladite goutte froide 13, permet de renforcer le réseau de nervures 17, et plus particulièrement l'alvéole 18 concernée, par un remplissage (en l'occurrence un remplissage au moins partiel de ladite alvéole 18) qui crée une sorte d'entretoise (entre les nervures 17 concernées, au sein de ladite alvéole 18).

Ainsi, le piégeage de la goutte froide 13 non seulement n'engendre aucune fragilisation structurelle de la roue 1, mais participe au contraire au renforcement de la roue 1.

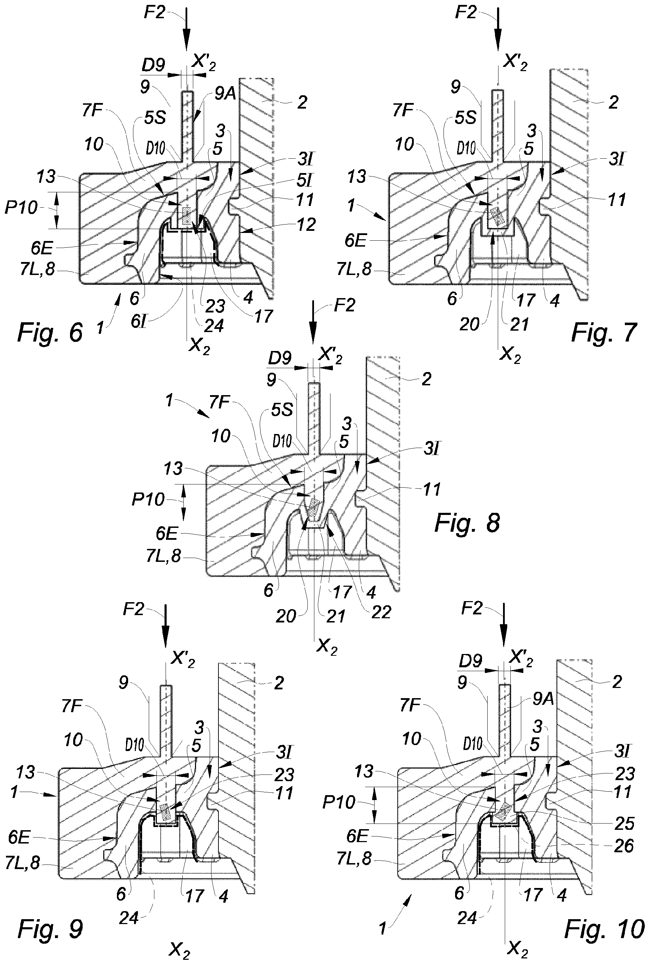

Selon une possibilité de mise en oeuvre, la cavité de piégeage 10 est formée par un trou borgne 20 creusé dans l'âme porteuse 3, depuis la surface supérieure 5S de ladite âme porteuse 3 (ici la surface supérieure 5S de la collerette 5) qui fait face à la buse d'injection 9, tel que cela est illustré sur les figures 7 et 8.

En d'autres termes, la paroi de fond 21 qui obstrue le trou 20 à l'opposé de la buse d'injection 9 est de préférence préformée lors étape (a) de réalisation de l'âme porteuse, de sorte à être venue de matière avec ladite âme porteuse 3.

Un tel agencement simplifie avantageusement l'opération d'enrobage, en permettant de conserver la même empreinte (inférieure) du moule aussi bien pour le premier surmoulage (de l'âme 3 sur l'arbre 2) que pour le second surmoulage (de la couche d'enrobage 7 sur l'âme 3).

Selon une variante possible de réalisation, tel que cela est illustré sur la figure 8, le fond de la cavité (borgne) de piégeage 10, situé à l'opposé de la buse d'injection 9, peut former une cuvette 22, par exemple tronconique, qui va en se rétrécissant au fur et à mesure que l'on s'éloigne (ici axialement) de la buse d'injection 9.

Le cas échéant, une telle cuvette 22 permet de doter le trou borgne 20 d'un angle de dépouille qui facilite sa réalisation par moulage d'un seul tenant avec l'âme porteuse 3 lors de l'étape (a) de réalisation de l'âme porteuse. En particulier, le plan de joint pourra alors être sensiblement normal à l'axe directeur (XX').

Selon une possibilité de mise en oeuvre du procédé, la cavité de piégeage 10 pourra être formée, tel que cela est illustré sur les figures 6, 9 et 10, par la combinaison provisoire, lors de l'étape (b) d'enrobage (c'est-à-dire le temps de ladite étape d'enrobage), d'une part d'un trou débouchant 23 qui traverse axialement l'âme porteuse 3, et d'autre part d'une empreinte de moule 24 (de forme adaptée, par exemple de type poinçon), schématisée en traits pointillés sur lesdites figures 6, 9 et 10, qui matérialise une paroi de fond barrant ledit trou débouchant 23, à l'opposé de la buse d'injection 9.

En pratique, on pourra à cet effet changer d'empreinte de moule entre l'étape (a) de réalisation de l'âme porteuse 3 (premier surmoulage) et l'étape (b) d'enrobage (second surmoulage), la première empreinte de moule utilisée pour l'étape (a) de réalisation de l'âme porteuse pouvant par exemple comprendre un noyau de moulage saillant destiné à former le trou débouchant 23, tandis que la seconde empreinte de moule 24, distincte de la première, et utilisée pour l'étape (b) d'enrobage, sera typiquement dépourvue de noyau saillant, ce dernier étant le cas échéant remplacé par une forme qui correspond à la paroi de fond qui vient compléter le trou débouchant 23 présent dans l'âme porteuse 3 pour définir la cavité de piégeage 10.

Avantageusement, une telle solution permet de choisir assez librement la forme, le volume (contenance) et la profondeur de la cavité de piégeage 10, par le choix d'une empreinte de moule 24 de forme et de dimensions adaptées.

En particulier, on pourra choisir d'accoler l'empreinte de moule 24 au trou débouchant 23, afin que la paroi de fond, et donc le bloc formé par le second matériau piégé, affleure le chant (axialement inférieur) dudit trou débouchant 23, tel que cela est illustré sur la figure 6, ou bien au contraire de placer l'empreinte de moule 24, et donc la paroi de fond, en retrait (axial) du trou débouchant 23, de sorte à augmenter la profondeur de la cavité de piégeage 10 dans le prolongement de la buse d'injection 9, tel que cela est illustré sur les figures 9 et 10.

Le trou débouchant 23, qui traverse de part en part la collerette 5 dans le sens de son épaisseur axiale (depuis la surface supérieure 5S jusqu'à la surface inférieure 5I), pourra être formé soit directement au moyen d'un noyau de moulage, lors du moulage de l'âme porteuse 3 sur l'arbre 2, soit par usinage, et plus particulièrement par perçage, après le moulage de l'âme porteuse 3 sur l'arbre 2.

Selon une variante possible de réalisation, l'empreinte de moule 24 formant la paroi de fond de la cavité de piégeage 10 pourra présenter un renfoncement élargi 26, dont le diamètre est supérieur au diamètre du trou débouchant 23 de sorte à permettre la formation d'un collet d'accroche 25 lors du remplissage par le second matériau, tel que cela est illustré sur la figure 10.

Avantageusement, une fois le second matériau solidifié (refroidi), ledit collet d'accroche 25 agira, à l'encontre des bords du trou débouchant 23, en l'espèce à l'encontre de la surface inférieure 5I de la collerette 5, à la manière d'une tête de rivet, pour renforcer l'ancrage de la couche d'enrobage 7 sur l'âme porteuse 3.

Par ailleurs, afin d'avoir la certitude de capturer la goutte froide 13, au début de l'injection du second matériau, la cavité de piégeage 10 sera bien entendu orientée et dimensionnée pour recevoir le premier jet du second matériau, à concurrence d'un volume de réserve suffisant pour contenir ladite goutte froide ainsi qu'un volume élémentaire de second matériau liquide qui charrie ou qui suit immédiatement ladite goutte froide 13. La contenance de la cavité de piégeage sera donc strictement supérieure au volume prévisible de la goutte froide 13.

A cet effet, le diamètre d'accès D10 de la cavité de piégeage 10, telle qu'elle s'ouvre face à la buse d'injection 9, sera de préférence compris entre 2 fois et 5 fois le diamètre D9 du canal 9A de ladite buse d'injection 9.

Pour la même raison, la profondeur P10 de ladite cavité de piégeage 10, considérée dans le prolongement, ici le prolongement axial, de la buse d'injection 9 (et donc dans le prolongement du jet initial du second matériau), est de préférence comprise entre 2 fois et 5 fois le diamètre D9 du canal 9A de ladite buse d'injection 9.

Selon une possibilité préférentielle de mise en oeuvre, on utilise, lors de l'étape (b) d'enrobage, plusieurs buses d'injection 9 distinctes, de préférence quatre buses d'injection équiréparties autour de l'axe directeur (XX'), toutes les buses d'injection 9 étant placées en déport radial de l'axe directeur (XX') et de l'alésage 3I, chacune en vis-à-vis d'une cavité de piégeage 10 qui est formée dans l'épaisseur axiale de l'âme porteuse 3 (selon l'une quelconque des caractéristiques, ou combinaisons de caractéristiques, susmentionnées).

La multiplicité des buses 9, de préférences alimentées par des blocs chauds (gravitaires ou à pression supérieure à la pression atmosphérique), assurera la formation rapide d'une couche d'enrobage 7 particulièrement homogène, ce qui permettra notamment d'éviter les défauts d'aspect et de circularité de la roue 1, et plus particulièrement de la jante 8.

En prévoyant autant de cavités de piégeage 10 que de points (buses) d'injection, on sécurisera avantageusement le procédé vis-à-vis de toutes les sources potentielles de gouttes froides 13.

Par ailleurs, l'invention concerne également en tant que telle une roue 1, et plus particulièrement une roue dentée 1 obtenue par un procédé selon l'une et/ou l'autre des caractéristiques décrites, et présentant donc l'une ou l'autre des caractéristiques structurelles correspondantes.

L'invention portera notamment en tant que telle sur une roue 1 présentant une goutte froide 13 (intentionnellement) piégée (et conservée) dans une portion intermédiaire de ladite roue 1, entre le moyeu 4 et la jante 8, et plus particulièrement dans une cavité de piégeage 10 ménagée dans son âme porteuse 3, sensiblement dans la zone correspondant aux rayons de ladite roue 1, en vis-à-vis du point d'injection ayant servi au (sur)moulage de la roue 1 (et plus particulièrement en vis-à-vis du point d'injection ayant servi au moins au surmoulage de la couche d'enrobage 7 apparente de ladite roue), et à distance, et notamment en retrait radial, de la jante 8 et des dents d'engrènement.

Enfin, l'invention n'est nullement limitée aux seules variantes de réalisation décrites dans ce qui précède, l'homme du métier étant notamment à même d'isoler ou de combiner librement entre elles l'une ou l'autre des caractéristiques susmentionnées, ou encore de leur substituer des équivalents.

## Revendications

1. Procédé de fabrication d'une roue (1) comprenant une étape (a) de réalisation d'une âme porteuse au cours de laquelle on réalise, dans un premier matériau, une âme porteuse (3) qui s'étend depuis une paroi radialement interne (3I) formant un alésage d'axe directeur (XX'), correspondant à l'axe de rotation de la roue (1), jusqu'à un bord périphérique (6) radialement externe, ledit procédé comprenant ensuite une étape (b) d'enrobage au cours de laquelle on place l'âme porteuse (3) dans un moule et l'on injecte, au moyen d'au moins une buse d'injection (9), un second matériau polymère de sorte à enrober, par surmoulage, au moins partiellement ladite âme porteuse (3) afin de former une jante (8) autour de son bord périphérique (6), ledit procédé étant tel que, lors de l'étape (b) d'enrobage, on place la buse d'injection (9) en déport radial de l'axe directeur (XX') et de l'alésage, en vis-à-vis d'une cavité de piégeage (10) qui est formée dans l'épaisseur axiale (P3) de ladite âme porteuse (3), dans l'espace compris radialement entre l'alésage (3I) et le bord périphérique (6), de telle manière que, lorsqu'une goutte froide (13) s'est précédemment solidifiée dans la buse d'injection (9), on expulse, lors de l'injection (F2) du second matériau, ladite goutte froide (13) hors de la buse d'injection (9) et jusque dans ladite cavité de piégeage (10), de telle sorte que ladite goutte froide (13) reste piégée définitivement à l'intérieur de la roue (1) finie, le procédé étant **caractérisé en ce que** l'âme porteuse (3) comprend un moyeu (4), matérialisant la paroi radialement interne (3I) de l'alésage, une collerette (5) qui s'étend sensiblement radialement depuis ledit moyeu (4) jusqu'au bord périphérique (6) radialement externe, ainsi qu'une pluralité de nervures de renfort (17) disposées selon plusieurs azimuts autour de l'axe directeur (XX') afin de renforcer localement l'épaisseur axiale de ladite collerette (5), et **en ce que** la cavité de piégeage (10) est formée dans un secteur angulaire creux (18) compris entre deux nervures de renfort (17) consécutives.

2. Procédé selon la revendication 1 **caractérisé en ce que** l'âme porteuse (3) est fabriquée d'un seul tenant dans un matériau polymère thermoplastique, par moulage par injection.

3. Procédé selon l'une des revendications 1 ou 2 **caractérisé en ce que** la cavité de piégeage (10) est formée par un trou borgne (20) creusé dans l'âme porteuse (3), depuis la surface supérieure (5S) de ladite âme porteuse qui fait face à la buse d'injection (9).

4. Procédé selon la revendication 3 **caractérisé en ce que** le fond de la cavité de piégeage (10), situé à l'opposé de la buse d'injection (9), forme une cuvette (22) qui va en se rétrécissant au fur et à mesure que l'on s'éloigne de la buse d'injection (9).

5. Procédé selon l'une des revendications 1 ou 2 **caractérisé en ce que** la cavité de piégeage (10) est formée par la combinaison provisoire, lors de l'étape (b) d'enrobage, d'un trou débouchant (23) qui traverse axialement l'âme porteuse (3) et d'une empreinte de moule (24) qui matérialise une paroi de fond barrant ledit trou débouchant (23), à l'opposé de la buse d'injection (9).

6. Procédé selon la revendication 5 **caractérisé en ce que** l'empreinte de moule (24) formant la paroi de fond de la cavité de piégeage (10) présente un renfoncement élargi (26), dont le diamètre est supérieur au diamètre du trou débouchant (23) de sorte à permettre la formation d'un collet d'accroche (25) lors du remplissage par le second matériau.

7. Procédé selon l'une des revendications précédentes **caractérisé en ce que** le diamètre d'accès (D10) de la cavité de piégeage (10), telle qu'elle s'ouvre face à la buse d'injection (9), est compris entre 2 fois et 5 fois le diamètre (D9) du canal (9A) de ladite buse d'injection, et **en ce que** la profondeur (P10) de ladite cavité de piégeage (10) est comprise entre 2 fois et 5 fois le diamètre (D9) du canal (9A) de ladite buse d'injection.

8. Procédé selon l'une des revendications précédentes **caractérisé en ce que** l'on utilise, lors de l'étape (b) d'enrobage, plusieurs buses d'injection (9) distinctes, de préférence quatre buses d'injection équiréparties autour de l'axe directeur (XX'), toutes les buses d'injection (9) étant placées en déport radial de l'axe directeur (XX') et de l'alésage (3I), chacune en vis-à-vis d'une cavité de piégeage (10) qui est formée dans l'épaisseur axiale de l'âme porteuse (3).

9. Procédé selon l'une des revendications précédentes **caractérisé en ce que**, lors de l'étape (a) de réalisation de l'âme porteuse, on forme, de préférence d'un seul tenant, l'âme porteuse (3) dans un premier matériau polymère, de préférence thermoplastique, par surmoulage direct de ladite âme porteuse (3) autour d'un arbre (2) matérialisant l'axe de rotation de la roue (1), et **en ce que** le procédé comporte une étape (c) de taillage, postérieure à l'étape (b) d'enrobage, au cours de laquelle on réalise des dents d'engrènement par taillage dans l'épaisseur de la jante (8) afin d'obtenir une roue dentée.

10. Procédé selon l'une des revendications précédentes **caractérisé en ce que** le premier matériau, de préférence un polymère thermoplastique, utilisé pour réaliser l'âme porteuse (3), présente une rigidité supérieure au second matériau utilisé pour enrober l'âme porteuse et former la jante (8).

## Patentansprüche

1. Verfahren zur Fertigung eines Rades (1), einen Schritt (a) zur Herstellung eines Tragestegs umfassend, im Laufe dessen man aus einem ersten Material einen Tragesteg (3) herstellt, der sich von einer radial innen liegenden Wand (31), die eine Bohrung mit einer Leitachse (XX') bildet, die der Drehachse des Rades (1) entspricht, bis zu einem radial außen liegenden umlaufenden Rand (6) erstreckt, wobei das besagte Verfahren danach einen Schritt (b) zur Ummantelung umfasst, im Laufe dessen man den Tragesteg (3) in eine Form einsetzt, und man anhand zumindest einer Einspritzdüse (9) ein zweites Polymermaterial einspritzt, um den besagten Tragesteg (3) zumindest teilweise durch Überformung zu ummanteln, um einen Radkranz (8) um seinen umlaufenden Rand (6) zu bilden, wobei das besagte Verfahren dergestalt ist, dass man im Schritt (b) zur Ummantelung die Einspritzdüse (9) radial versetzt zur Leitachse (XX') und zur Bohrung gegenüber einer Einfangvertiefung (10) platziert, die in der axialen Dicke (P3) des besagten Tragestegs (3) in dem Raum gebildet wird, der radial zwischen der Bohrung (31) und dem umlaufenden Rand (6) enthalten ist, sodass, wenn sich ein Angussstutzen (13) zuvor in der Einspritzdüse (9) verfestigt hat, man beim Einspritzen (F2) des zweiten Materials den besagten Angussstutzen (13) aus der Einspritzdüse (9) heraus und bis in die besagte Einfangvertiefung (10) ausstößt, sodass der besagte Angussstutzen (13) endgültig im Inneren des fertigen Rades (1) eingefangen bleibt, wobei das Verfahren **dadurch gekennzeichnet ist, dass** der Tragesteg (3) eine Nabe (4) umfasst, welche die radial innen liegende Wand (31) der Bohrung vergegenständlicht, einen Sattel (5), der sich im Wesentlichen radial aus der besagten Nabe (4) bis zum radial außen liegenden umlaufenden Rand (6) erstreckt, sowie eine Vielzahl von Verstärkungsrippen (17), die in mehrere Azimute um die Leitachse (XX') herum angeordnet sind, um lokal die axiale Dicke des besagten Sattels (5) zu verstärken, und dadurch, dass die Einfangvertiefung (10) in einem hohlen Winkelsektor (18) gebildet wird, der zwischen zwei aufeinanderfolgenden Verstärkungsrippen (17) enthalten ist.

2. Verfahren nach Anspruch 1, **dadurch gekennzeichnet, dass** der Tragesteg (3) in einem Stück aus einem thermoplastischen Polymer-Material durch Spritzgießen gefertigt ist.

3. Verfahren nach einem der Ansprüche 1 oder 2, **dadurch gekennzeichnet, dass** die Einfangvertiefung (10) durch ein Sackloch (20) gebildet wird, das im Tragesteg (3) von der Oberseite (5S) des besagten Tragestegs aus ausgehöhlt ist, die gegenüber der Einspritzdüse (9) liegt.

4. Verfahren nach Anspruch 3, **dadurch gekennzeichnet, dass** der Boden der Einfangvertiefung (10), der sich gegenüber der Einspritzdüse (9) befindet, eine Mulde (22) bildet, die sich, je weiter man sich von der Einspritzdüse (9) entfernt, nach und nach verjüngt.

5. Verfahren nach einem der Ansprüche 1 oder 2, **dadurch gekennzeichnet, dass** die Einfangvertiefung (10) durch die vorübergehende Kombination, im Schritt (b) zur Ummantelung, eines Durchgangsloches (23), das axial durch den Tragesteg (3) führt, und eines Formhohlraumes (24) gebildet wird, der eine Bodenwand vergegenständlicht, die das besagte Durchgangsloch (23) gegenüber der Einspritzdüse (9) versperrt.

6. Verfahren nach Anspruch 5, **dadurch gekennzeichnet, dass** der Formhohlraum (24), der die Bodenwand der Einfangvertiefung (10) bildet, eine erweiterte Vertiefung (26) aufweist, deren Durchmesser größer ist, als der Durchmesser des Durchgangsloches (23), um beim Füllen mit dem zweiten Material die Bildung einer Haftmanschette (25) zu ermöglichen.

7. Verfahren nach einem der vorhergehenden Ansprüche, **dadurch gekennzeichnet, dass** der Zugangsdurchmesser (D10) zur Einfangvertiefung (10), in der Art, wie sie sich gegenüber der Einspritzdüse (9) öffnet, 2 bis 5 Mal dem Durchmesser (D9) des Kanals (9A) der besagten Einspritzdüse entspricht, und dadurch, dass die Tiefe (P10) der besagten Einfangvertiefung (10) 2 bis 5 Mal dem Durchmesser (D9) des Kanals (9A) der besagten Einspritzdüse entspricht.

8. Verfahren nach einem der vorhergehenden Ansprüche, **dadurch gekennzeichnet, dass** man beim Schritt (b) zur Ummantelung mehrere verschiedene Einspritzdüsen (9), vorzugsweise vier um die Leitachse (XX') gleichverteilte Einspritzdüsen verwendet, wobei alle Einspritzdüsen (9) im radialen Versatz zur Leitachse (XX') und zur Bohrung (31), jeweils gegenüber einer Einfangvertiefung (10) platziert sind, die in der axialen Dicke des Tragestegs (3) gebildet wird.

9. Verfahren nach einem der vorhergehenden Ansprüche, **dadurch gekennzeichnet, dass** man beim Schritt (a) zur Herstellung des Tragestegs den Tragesteg (3) vorzugsweise in einem Stück aus einem vorzugsweise thermoplastischen ersten Polymermaterial durch direktes Überformen des besagten Tragestegs (3) um eine Welle (2) bildet, welche die Drehachse des Rades (1) vergegenständlicht, und dadurch, dass das Verfahren einen Schritt (c) zum Walzfräsen nach dem Schritt (b) zum Ummanteln umfasst, im Laufe dessen man Eingriffszähne durch Walzfräsen in der Radkranzdicke (8) erzeugt, um ein Zahnrad zu erhalten.

10. Verfahren nach einem der vorhergehenden Ansprüche, **dadurch gekennzeichnet, dass** das erste Material, vorzugsweise ein thermoplastisches Polymer, das zur Herstellung des Tragestegs (3) verwendet wird, eine Steifigkeit aufweist, die größer ist, als die des zweiten Materials, das zur Ummantelung des Tragestegs und Bildung des Radkranzes (8) verwendet wird.

## Claims

1. A method for manufacturing a wheel (1) comprising a step (a) of making a carrier core during which is made of a first material a carrier core (3) which extends from a radially inner wall (3I) forming a bore having a main axis (XX'), corresponding to the axis of rotation of the wheel (1), to a radially outer peripheral edge (6), said method then comprising a coating step (b) during which the carrier core (3) is placed in a mold and a second polymer material is injected by means of at least one injection nozzle (9) so as to coat, by overmolding, at least partially said carrier core (3) in order to form a rim (8) around its peripheral edge (6), said method being such that, during the coating step (b), the injection nozzle (9) is placed in radial offset from the main axis (XX') and from the bore, facing a trapping recess (10) which is formed in the axial thickness (P3) of said carrier core (3), in the space radially comprised between the bore (31) and the peripheral edge (6), so that, when a cold slug (13) has previously solidified in the injection nozzle (9), said cold slug (13) is expelled, during the injection (F2) of the second material, out of the injection nozzle (9) and up to said trapping recess (10) so that said cold slug (13) remains definitely trapped inside the finished wheel (1), the method being **characterized in that** the carrier core (3) comprises a hub (4), materializing the radially inner wall (3I) of the bore, a flange (5) which extends substantially radially from said hub (4) to the radially outer peripheral edge (6), as well as a plurality of reinforcing ribs (17) disposed in several azimuths about the main axis (XX') in order to locally reinforce the axial thickness of said flange (5), and **in that** the trapping recess (10) is formed in a hollow angular sector (18) comprised between two consecutive reinforcing ribs (17).

2. The method according to claim 1, **characterized in that** the carrier core (3) is made in one single piece of a thermoplastic polymer material by injection molding.

3. The method according to any of claims 1 or 2, **characterized in that** the trapping recess (10) is formed by a blind hole (20) dug in the carrier core (3), from the upper surface (5S) of said carrier core facing the injection nozzle (9).

4. The method according to claim 3, **characterized in that** the bottom of the trapping recess (10), located opposite the injection nozzle (9), forms a cup (22) which gets narrower as it gets farther from the injection nozzle (9).

5. The method according to any of claims 1 or 2, **characterized in that** the trapping recess (10) is formed by the provisional combination, during the coating step (b), of a through hole (23) which passes axially through the carrier core (3) and of a mold cavity (24) which materializes a bottom wall crossing said through hole (23), opposite the injection nozzle (9).

6. The method according to claim 5, **characterized in that** the mold cavity (24) forming the bottom wall of the trapping recess (10) has an enlarged recess (26), whose diameter is greater than the diameter of the through hole (23) so as to enable the formation of a hooking collar (25) during the filling by the second material.

7. The method according to any of the preceding claims, **characterized in that** the access diameter (D10) of the trapping recess (10), as it opens facing the injection nozzle (9), is comprised between 2 times and 5 times the diameter (D9) of the channel (9A) of said injection nozzle, and **in that** the depth (P10) of said trapping recess (10) is comprised between 2 times and 5 times the diameter (D9) of the channel (9A) of said injection nozzle.

8. The method according to any of the preceding claims, **characterized in that**, during the coating step (b), several distinct injection nozzles (9), preferably four injection nozzles equally distributed about the main axis (XX'), are used, all the injection nozzles (9) being placed radially offset from the main axis (XX') and from the bore (31), each facing a trapping recess (10) which is formed in the axial thickness of the carrier core (3).

9. The method according to any of the preceding claims, **characterized in that**, during the step (a) of making the carrier core (3), the carrier core (3) is formed, preferably in one single piece, in a first, preferably thermoplastic, polymer material by direct overmolding of said carrier core (3) about a shaft (2) materializing the axis of rotation of the wheel (1), and **in that** the method includes a cutting step (c), subsequent to the coating step (b), during which meshing teeth are made by cutting within the thickness of the rim (8) in order to obtain a toothed wheel.

10. The method according to any of the preceding claims, **characterized in that** the first material, preferably a thermoplastic polymer, used for making the carrier core (3), has a rigidity which is higher than the rigidity of the second material used for coating the carrier core and forming the rim (8).
